# EUROPEAN PATENT APPLICATION

(11) **EP 4 219 301 A1**
(43) Date of publication of application: **02.08.2023**
(21) Application number: 21879972.4
(22) Date of filing: 07.10.2021
(51) Int. Cl.: B64C 27/08, B64C 27/26, B64C 27/28

(54) **FLYING BODY**

(30) Priority: 15.10.2020 JP 2020173666
(71) Applicant: Quintuple Air, Inc., Tokyo 107-0052 (JP)
(72) Inventor: KITAMA, Shoji, Tokyo 107-0052 (JP)
(74) Representative: Schröer, Gernot H.
(86) International application number: PCT/JP2021/037165
(87) International publication number: WO 2022/080232

(57) **Abstract**

A flight vehicle includes a front rotor (10) on a front part of an airframe, a rear rotor (12) on a rear part of the airframe, a front deflection mechanism that changes an angle of the front rotor (10) with respect to the airframe within a first range, a rear deflection mechanism that changes an angle of the rear rotor (12) with respect to the airframe within a second range, and a main module (2), which is in the airframe, for containing objects to be transported. The first range is set to a range in which a plane containing the rotation surface of the front rotor (10) does not pass across the main module (2). The second range is set to a range in which a plane containing the rotation surface of the rear rotor (12) does not pass across the main module (2).

## Description

### Technical Field

The present invention relates to a flight vehicle including rotors having variable tilt angles with respect to an airframe.

### Background Art

Vertical take-off and landing (VTOL) aircraft are capable of vertical takeoff, hovering, and vertical landing, and do not therefore require runways, unlike fixed-wing aircraft. One type of VTOL aircraft is a helicopter, which cannot use main wings, and the range thereof is therefore limited as compared with fixed-wing aircraft. In this regard, in a case of a VTOL aircraft (tiltrotor aircraft) including a tiltrotor, the angle of the rotor with respect to an airframe is variable between a VTOL mode and a cruising mode. In the VTOL mode, the tiltrotor aircraft generates upward thrust by directing the rotor in the vertical direction. In the cruising mode, the tiltrotor aircraft generates forward thrust by directing the rotor in the front-back direction. The tiltrotor aircraft has both the vertical lift of a helicopter and the cruising performance of a fixed-wing aircraft.

An example of such a tiltrotor aircraft includes tiltrotors at a front part and a rear part of an airframe (refer to Patent Literature 1). A main module for accommodating objects to be transported is located at the center of an airframe. A front rotor functions as a tractor rotor, and a rear rotor functions as a thrust rotor. When the flight mode changes from the VTOL mode to the cruising mode, the front rotor changes from upward tilt to forward tilt with respect to the airframe and the rear rotor changes from downward tilt to backward tilt with respect to the airframe. Conversely, when the flight mode changes from the cruising mode to the VTOL mode, the front rotor changes from upward tilt to forward tilt with respect to the airframe and the rear rotor changes from backward tilt to downward tilt with respect to the airframe.

### Related Art List

Patent Literature 1: US 10618656 B2

### Summary

### Technical Problem

Note that, because a VTOL aircraft rotates rotors at low altitudes during VTOL, a rotor may interfere with a tree branch or the like. Regardless of the operation mode, a rotor may interfere with a flying object such as a bird. Pieces of a foreign material scattering as a result of the interference may fly along the rotation surface of the rotor (a plane along which the blade edges of the rotor passes during rotation of the rotor) owing to centrifugal force and damage the main module. In particular, because the directions of the rotation surfaces of the rotors change during transition of the operation mode, there is also concern that the directions in which a foreign material scatters cannot be predicted. Such a problem is not limited to VTOL aircraft but can also be caused on any flight vehicle having front rotors and rear rotors that tilt with respect to the airframe depending on the operation mode.

The present invention has been achieved on the basis of recognition of the aforementioned problems, and a chief object thereof is to prevent negative effects on a main module when a foreign material interfere with a rotor of a flight vehicle.

### Solution to problem

A flight vehicle according to an aspect of the present invention includes: a front rotor on a front part of an airframe; a rear rotor on a rear part of the airframe; a front deflection mechanism that changes an angle of the front rotor with respect to the airframe within a first range; a rear deflection mechanism that changes an angle of the rear rotor with respect to the airframe within a second range; and a main module for containing objects to be transported, the main module being in the airframe. The first range is set to a range in which a plane containing a rotation surface of the front rotor does not pass across the main module. The second range is set to a range in which a plane containing a rotation surface of the rear rotor does not pass across the main module.

A flight vehicle according to another aspect of the present invention includes: a front rotor on a front part of an airframe; a rear rotor on a rear part of the airframe; a front deflection mechanism capable of changing an angle of the front rotor with respect to the airframe; a rear deflection mechanism capable of changing an angle of the rear rotor with respect to the airframe; a main module for containing objects to be transported, the main module being in the airframe, and a processor for controlling the front deflection mechanism and the rear deflection mechanism. The processor controls the front deflection mechanism so that a plane containing a rotation surface of the front rotor does not pass across the main module. The processor controls the rear deflection mechanism so that a plane containing a rotation surface of the rear rotor does not pass across the main module.

A flight vehicle according to still another aspect of the present invention includes: a front rotor on a front part of an airframe; a rear rotor on a rear part of the airframe; a front deflection mechanism that changes an angle of the front rotor with respect to the airframe within a first range; a rear deflection mechanism that changes an angle of the rear rotor with respect to the airframe within a second range; and a main module for containing objects to be transported, the main module being in the airframe. The first range is set to a range in which a plane containing a rotation surface of the front rotor does not pass across a predetermined damage avoiding area of the main module. The second range is set to a range in which a plane containing a rotation surface of the rear rotor does not pass across the damage avoiding area.

### Advantageous Effects of Invention

According to the present invention, even when a foreign material interferes with a rotor of a flight vehicle, it is possible to prevent negative effects thereof on the main module.

### Brief Description of Drawings

FIG. 1 is a perspective view illustrating an external appearance of a flight vehicle according to an embodiment.
FIGS. 2A and 2B are plan views illustrating a configuration of a VTOL aircraft.
FIGS. 3A and 3B are front views illustrating a configuration of the VTOL aircraft.
FIGS. 4A and 4B are side views illustrating a configuration of the VTOL aircraft.
FIGS. 5A and 5B are diagrams schematically illustrating the structures of a rotor unit and around the rotor unit.
FIG. 6 is a block diagram schematically illustrating an electrical configuration of the VTOL aircraft.
FIGS. 7A to 7D are diagrams illustrating control on switching from a VTOL mode to a cruising mode.
FIGS. 8A and 8B are diagrams illustrating changes of rotation planes of rotors.
FIG. 9 is a flowchart illustrating an operation mode switching process.
FIG. 10 is a flowchart illustrating a process of controlling the attitude of an airframe.
FIGS. 11A and 11B are diagrams illustrating a configuration of a VTOL aircraft according to a modification.
FIG. 12 is a flowchart illustrating a process of controlling the attitude of an airframe according to a modification.

### Description of Embodiments

An embodiment of the present invention will now be described in detail with reference to the drawings. In the following embodiments and modifications thereof, components that are substantially the same will be designated by the same reference numerals and redundant description thereof may be omitted as appropriate.

In the embodiment, a flight vehicle is exemplified by an electric VTOL aircraft. The VTOL aircraft includes a fuselage (corresponding to a "main module") at a central part of an airframe, and tiltrotors at a front part and a rear part thereof. When the front rotor and the rear rotor turn at transition of the operation mode, the positions and the turning directions of the respective rotors relative to the airframe are set so that planes containing respective rotation surfaces of the rotors (hereinafter also referred to as "rotation planes") do not pass across the fuselage. As a result, even if a foreign material interferes with a rotor, it is possible to prevent or reduce damage on a cabin. Details thereof will be described hereinafter.

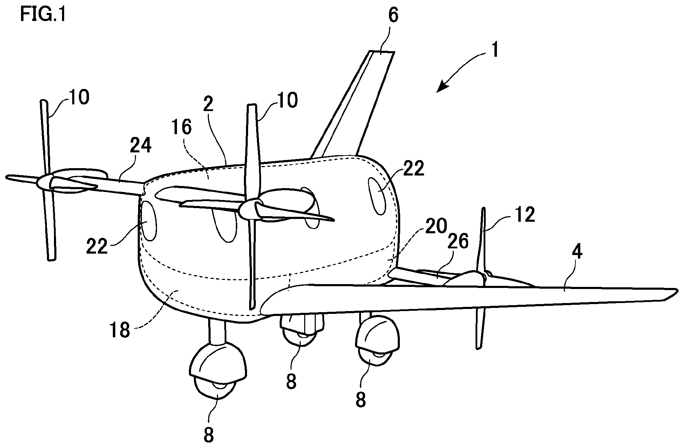

FIG. 1 is a perspective view illustrating an external appearance of the flight vehicle according to the embodiment.

The VTOL aircraft 1 includes a fuselage 2 at a central part of the airframe, main wings 4 on the right and the left of the fuselage 2, a vertical tail wing 6 on a rear part of the fuselage 2, and a plurality of wheels 8 provided to extend downward from the fuselage 2. The VTOL aircraft 1 also includes a pair of left and right front rotors 10 on the front part of the airframe, and a pair of left and right rear rotors 12 on the rear part thereof.

In the embodiment, the VTOL aircraft 1 is an automatically operated aircraft (automatically controlled aircraft) without a cockpit, and includes a cabin 16 inside the fuselage 2. Passengers, which are objects to be transported, get in the cabin 16. Underneath the cabin 16, an equipment room 18 for accommodating electronic instruments and the like, a machine room 20 for accommodating other equipment, and the like are located. A plurality of windows 22 are arranged on a front face and side faces of the fuselage 2 to enable viewing of the outside from the cabin 16.

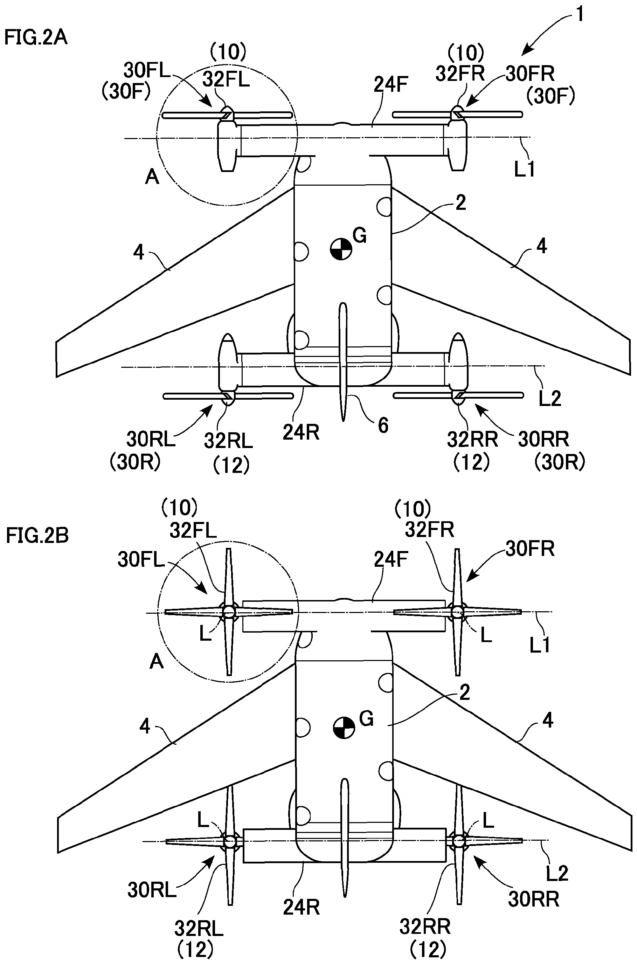

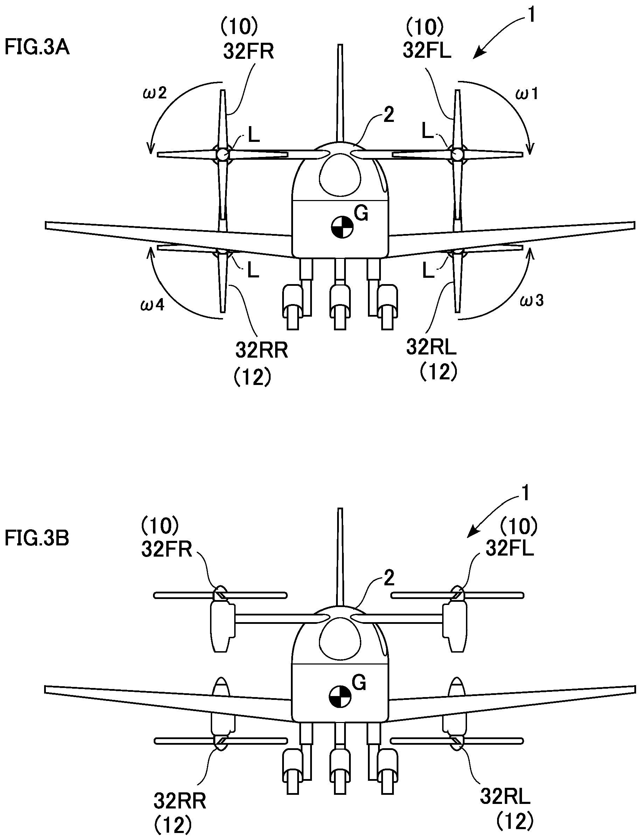

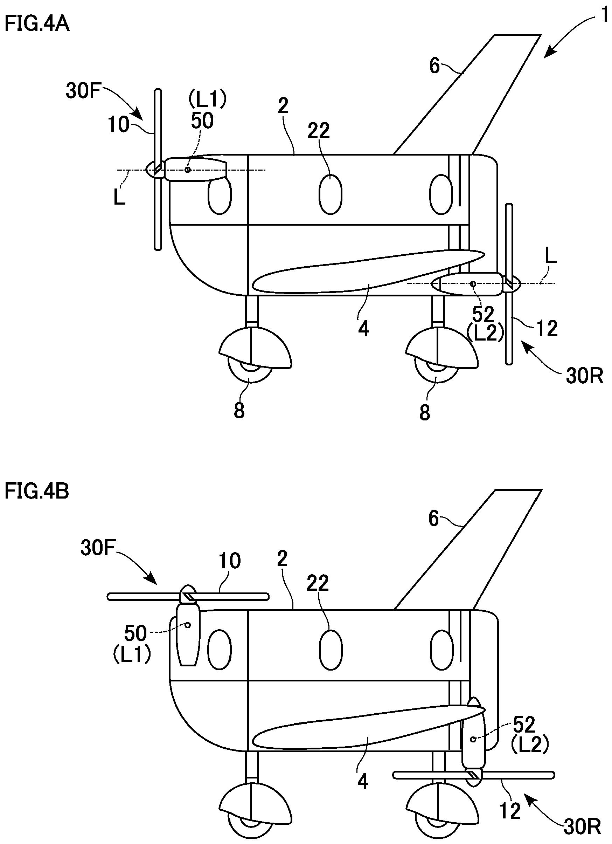

FIGS. 2A to 4B are diagram illustrating a structure of the VTOL aircraft 1. FIGS. 2A and 2B are plan views, FIGS. 3A and 3B are front views, and FIGS. 4A and 4B are side views. FIGS. 2A, 3A, and 4A illustrate cruising states, and FIGS. 2B, 3B, and 4B illustrate VTOL states. Note that, in the following description, relative positions in the front-back direction, the lateral direction, and the vertical direction, and the rotating directions of rotors will be expressed with respect to the axial direction of the VTOL aircraft 1.

As illustrated in FIG. 2A, a pair of main wings 4 extend from the left and right side faces of the fuselage 2. The main wings 4 each have an airfoil cross section, and generate lift during cruising of the VTOL aircraft 1. In the embodiment, the main wings 4 are swept-back wings that sweep back toward wing ends, which reduces drag while the VTOL aircraft 1 flies at a high speed and improves stability. A front rod 24F extending horizontally in the lateral direction is provided on an upper part of a front end of the fuselage 2. In addition, a rear rod 24R extending horizontally in the lateral direction is provided on a lower part of a rear end of the fuselage 2. Hereinafter, the front rod 24F and the rear rod 24R will be collectively referred to as "rods 24" when the front rod 24F and the rear rod 24R are not particularly distinguished from each other.

A rotor unit 30FL (front-left rotor unit) is provided at a left end of the front rod 24F, and a rotor unit 30FR (front-right rotor unit) is provided at a right end thereof. The rotor unit 30FL includes a rotor 32FL (front-left rotor), and the rotor unit 30FR includes a rotor 32FR (front-right rotor). The rotors 32FL and 32FR function as the front rotors 10.

A rotor unit 30RL (rear-left rotor unit) is provided at a left end of the rear rod 24R, and a rotor unit 30RR (rear-right rotor unit) is provided at a right end thereof. The rotor unit 30RL includes a rotor 32RL (rear-left rotor), and the rotor unit 30RR includes a rotor 32RR (rear-right rotor). The rotors 32RL and 32RR function as the rear rotors 12.

The rotors each have a relatively large rotation surface so as to produce sufficient thrust during rotation. In the embodiment, the rotors are designed so that the diameters of the rotation surfaces are equal to or larger than the width of the fuselage 2. In order to reduce the weight of the VTOL aircraft 1, however, the respective rotor units 30 include no ducts (protective shields) surrounding the rotors.

The rotor 32FL and the rotor 32RL are arranged to be coaxial during cruising and so that projection representations of the rotor 32FL and the rotor 32RL in the front-back direction do not reach the fuselage 2. Similarly, the rotor 32FR and the rotor 32RR are also arranged to be coaxial during cruising and so that projection representations of the rotor 32FR and the rotor 32RR in the front-back direction do not reach the fuselage 2.

Hereinafter, the rotor units 30FL and 30FR will be collectively referred to as "front rotor units 30F" when the rotor units 30FL and 30FR are not particularly distinguished from each other. The rotor units 30RL and 30RR will be collectively referred to as "rear rotor units 30R" when the rotor units 30RL and 30RR are not particularly distinguished from each other. The rotor units 30FL, 30FR, 30RL, and 30RR will be collectively referred to as "rotor units 30" when the rotor units 30FL, 30FR, 30RL, and 30RR are not particularly distinguished from each other. The rotors 32FL, 32FR, 32RL, and 32RR will be collectively referred to as "rotors 32" when the rotors 32FL, 32FR, 32RL, and 32RR are not particularly distinguished from each other.

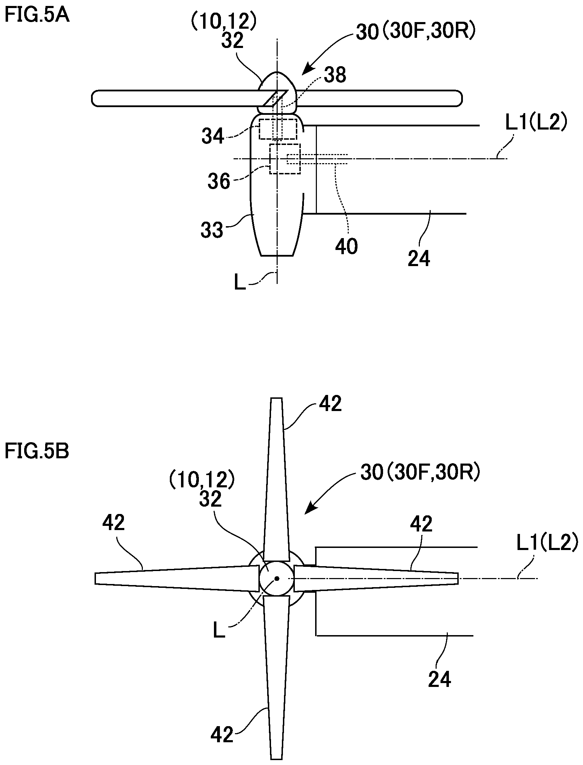

FIGS. 5A and 5B are diagrams schematically illustrating the structures of a rotor unit and around the rotor unit. FIG. 5A corresponds to an enlarged view of part A in FIG. 2A, and FIG. 5B corresponds to an enlarged view of part A in FIG. 2B.

As illustrated in FIG. 5A, each rotor unit 30 includes a first motor 34 and a second motor 36 in a hollow body 33. The rotor 32 is rotatably supported on one end of body 33. The first motor 34 is connected with a rotating shaft 38 of the rotor 32. When the first motor 34 is driven, the rotor 32 rotates about the axis L of the rotating shaft 38. The second motor 36 is connected with a central shaft 40, which extends from the rod 24, via a reduction gear or the like, which is not illustrated.

As also illustrated in FIG. 5B, when the second motor 36 is driven, the rotor unit 30 itself turns about the axis (axis L1 or L2, which will be described later) of the central shaft 40. The axes L1 and L2 are horizontal axes. A mechanism for turning a front rotor unit 30F (thus, a front rotor 10) about the axis L1 corresponds to a "front deflection mechanism". A mechanism for turning a rear rotor unit 30R (thus, a rear rotor 12) about the axis L2 corresponds to a "rear deflection mechanism". The rotor 32 includes a plurality of blades 42 extending radially from the center thereof. When the rotor 32 rotates, the blades 42 form a rotation surface. While four equidistant blades 42 are arranged in the embodiment, the number of blades 42 may be set as appropriate.

The description refers back to FIGS. 2A and 2B, in which the rotor unit 30FL and the rotor unit 30FR are turnable within a range of 90 degrees with a center at the axis L1 of the front rod 24F. Thus, the front rotor units 30F each continuously turn between a cruising angle (FIG. 2A) at which the front rotor 10 is directed forward and a VTOL angle (FIG. 2B) at which the front rotor 10 is directed upward (first range).

In contrast, the rotor unit 30RL and rotor unit 30RR are each turnable within a range of 90 degrees with a center at the axis L2 of the rear rod 24R. Thus, the rear rotor units 30R each continuously turn between a cruising angle (FIG. 2A) at which the rear rotor 12 is directed rearward and a VTOL angle (FIG. 2B) at which the rear rotor 12 is directed downward (second range).

As illustrated in FIG. 2A, the VTOL aircraft 1 has a substantially point-symmetric structure with respect to the center of the fuselage 2 in planar view except for the main wings 4. The main wings 4 are swept-back wings, the widths thereof become smaller toward the wing ends thereof, and base ends of the main wings 4 are located slightly closer to the front than the center of the fuselage 2 is located. Thus, the weights of the pair of main wings 4 balance with each other near the center of the fuselage 2. According to such a structure, the center of gravity G of the VTOL aircraft 1 is substantially at the center of the fuselage 2 in planar view, which facilitates the balancing. In addition, because the main wings 4 are significantly large relative to the fuselage 2, the lift can be easily maintained during cruising. Consequently, there is also an advantage in that the rotor outputs can be saved.

As illustrated in FIG. 2B, during VTOL, the arrangement is such that the axes L of the four rotors 32 are located at four vertices of a substantially square shape in planar view. The center of gravity G is substantially at the center of the square. As a result, the VTOL aircraft 1 can easily maintain balance during VTOL.

As illustrated in FIG. 3A, in the cruising mode, the axes L of the front rotors 10 are located at a height that is substantially equal to the height of an upper end of the fuselage 2. In contrast, the axes L of the rear rotors 12 are located at a height that is substantially equal to the height of a lower end of the fuselage 2. The pair of main wings 4 extend leftward and rightward from side faces of a lower part of the fuselage 2. According to such a structure, the center of gravity G of the VTOL aircraft 1 is slightly lower than the center of the fuselage 2. As a result, it is easy to stably maintain the balance between the lift and the gravity acting during cruising of the VTOL aircraft 1.

Regarding the front rotors 10, the rotor 32FL rotates counterclockwise, and the rotor 32FR rotates clockwise. Regarding the rear rotors 12, the rotor 32RL rotates clockwise, and the rotor 32RR rotates counterclockwise. As a result of setting the four rotors 32 so that left and right rotors rotate in directions opposite from each other and that front and rear rotors rotate in directions opposite from each other, counter torque acting on the VTOL aircraft 1 is cancelled out, which ensures the stability during cruising.

Attitude control of the VTOL aircraft 1 in the cruising mode is performed as follows.

For changing a pitch attitude, control described in Table 1 is performed.

**[Table 1]**

| | NOSE DOWN | NOSE UP |
|---|---|---|
| ROTOR 32FL ROTATING SPEED [ω1] | HIGH | LOW |
| ROTOR 32FR ROTATING SPEED [ω2] | HIGH | LOW |
| ROTOR 32RL ROTATING SPEED [ω3] | LOW | HIGH |
| ROTOR 32RR ROTATING SPEED [ω4] | LOW | HIGH |

In the embodiment, because the center of gravity G of the VTOL aircraft 1 is slightly lower than the center of the fuselage 2, the pitching moment in a forward inclination direction (a nose lowering direction) of the airframe and the pitching moment in a rearward inclination direction (a nose lifting direction) balance out when the rotating speed of the rotors 32FL and 32FR is lower than the rotating speed of the rotors 32RL and 32RR. The rotor rotating speeds at which the pitching moments in the forward inclination direction and in the rearward inclination direction balance out are set as reference rotating speeds (corresponding to "balanced rotating speeds").

The reference rotating speeds are set individually for the front rotors 10 (rotors 32FL and 32FR) and the rear rotors 12 (rotors 32RL and 32RR). The reference rotating speed of the front rotors 10 will also be referred to as a "front reference rotating speed", and the reference rotating speed of the rear rotors 12 will also be referred to as a "rear reference rotating speed". The reference rotating speeds may be preset depending on the cruising speed of the VTOL aircraft 1. As the cruising speed becomes higher, the reference rotating speeds becomes higher.

For example, in a case of an airframe with pitching moments balancing out when the speed of the rotors 32FL and 32FR is one fifth the speed of the rotors 32RL and 32RR, when the rotating speed of the rotors 32RL and 32RR is 2500 rpm, the pitching moments balance out with the rotors 32FL and 32FR rotating at 500 rpm. In this case, 500 rpm is the reference rotating speed (front reference rotating speed) of the rotors 32FL and 32FR, and 2500 rpm is the reference rotating speed (rear reference rotating speed) of the rotors 32RL and 32RR. In this manner, the reference rotating speed of the rotors 32FL and 32FR is changed depending on the rotating speed of the rotors 32RL and 32RR, and the reference rotating speed of the rotors 32RL and 32RR is changed depending on the rotating speed of the rotors 32FL and 32FR.

Thus, as shown in Table 1, for changing the rotating speeds to lower the nose of the airframe, control is performed to make the rotating speed of the rotors 32FL and 32FR higher than the reference rotating speed of the rotors 32FL and 32FR or make the rotating speed of the rotors 32RL and 32RR lower than the reference rotating speed of the rotors 32RL and 32RR. Alternatively, control may be performed to make the rotating speed of the rotors 32FL and 32FR higher than the reference rotating speed of the rotors 32FL and 32FR and make the rotating speed of the rotors 32RL and 32RR lower than the reference rotating speed of the rotors 32RL and 32RR.

Conversely, for changing the rotating speeds to lift the nose of the airframe, control is performed to make the rotating speed of the rotors 32FL and 32FR lower than the reference rotating speed of the rotors 32FL and 32FR or make the rotating speed of the rotors 32RL and 32RR higher than the reference rotating speed of the rotors 32RL and 32RR. Alternatively, control may be performed to make the rotating speed of the rotors 32FL and 32FR lower than the reference rotating speed of the rotors 32FL and 32FR and make the rotating speed of the rotors 32RL and 32RR higher than the reference rotating speed of the rotors 32RL and 32RR.

For changing a yaw attitude, control as shown in Table 2 is performed.

**[Table 2]**

| | NOSE RIGHT | NOSE LEFT |
|---|---|---|
| ROTOR 32FL ROTATING SPEED [ω1] | HIGH | LOW |
| ROTOR 32FR ROTATING SPEED [ω2] | LOW | HIGH |
| ROTOR 32RL ROTATING SPEED [ω3] | HIGH | LOW |
| ROTOR 32RR ROTATING SPEED [ω4] | LOW | HIGH |

Specifically, for changing the nose to face rightward, control is performed to make the rotating speed of the rotors 32FL and 32RL higher than the rotating speed of the rotors 32FR and 32RR. Conversely, for changing the nose to face leftward, control is performed to make the rotating speed of the rotors 32FL and 32RL lower than the rotating speed of the rotors 32FR and 32RR.

For changing a roll attitude, control as shown in Table 3 is performed.

**[Table 3]**

| | LEANING TO RIGHT | LEANING TO LEFT |
|---|---|---|
| ROTOR 32FL ROTATING SPEED [ω1] | HIGH | LOW |
| ROTOR 32FR ROTATING SPEED [ω2] | LOW | HIGH |
| ROTOR 32RL ROTATING SPEED [ω3] | LOW | HIGH |
| ROTOR 32RR ROTATING SPEED [ω4] | HIGH | LOW |

Specifically, for changing the roll attitude in a direction in which the airframe leans to the right, control is performed to make the rotating speed of the rotors 32FL and 32 RR higher than the rotating speed of the rotors 32FR and 32RL. Conversely, for changing the roll attitude in a direction in which the airframe leans to the left, control is performed to make the rotating speed of the rotors 32FL and 32RR lower than the rotating speed of the rotors 32FR and 32RL.

As described above, according to the embodiment, the attitude of VTOL aircraft 1 can be controlled only by changing the rotating speeds of the four rotors 32FL, 32RL, 32FR, and 32RR. Specifically, although the VTOL aircraft 1 does not have control surfaces like those of fixed-wing aircraft, any attitude control can be performed by controlling the rotating speeds of the four rotors because the heights of the front rotors 10 are different from the height of the rear rotors 12 during cruising.

As illustrated in FIG. 3B, in the VTOL mode, the front rotors 10 are directed upward and the rear rotors 12 are directed downward, but the thrusts of all the rotors 32 are upward. The VTOL operation is controlled while the balance between the thrusts of the four rotors 32 and the gravity of the VTOL aircraft 1 is adjusted.

As illustrated in FIGS. 4A and 4B, pivot shafts (turning shafts) 50 of the front rotor units 30F are along the axis L1, and pivot shafts 52 of the rear rotor units 30R are along the axis L2. The pivot shafts 50 are at positions higher than the pivot shafts 52. In addition, during cruising, the axes L of the front rotors 10 are parallel to the axes L of the rear rotors 12, and the axes L of the front rotors 10 are at positions higher than the axes L of the rear rotors 12. Furthermore, the front rotors 10 and the rear rotors 12 do not overlap with the fuselage 2 in side view in either of the cruising mode and the VTOL mode.

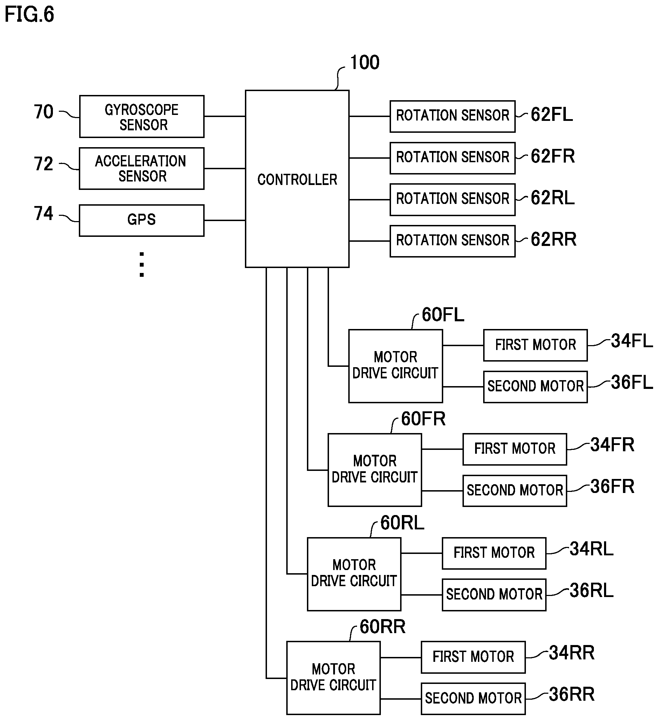

FIG. 6 is a block diagram schematically illustrating an electrical configuration of the VTOL aircraft 1.

A control system of the VTOL aircraft 1 includes a controller 100 as a main component. The controller 100 is a microcomputer that includes processors such as CPUs for executing various computing processes, a ROM storing control programs and the like, a RAM used as a work area for storing data and executing programs, a nonvolatile memory that holds stored contents even after power shutdown, an input/output interface, and the like. The controller 100 is installed in the equipment room 18 (see FIG. 1) in the fuselage 2.

The controller 100 is connected with the rotor units 30 via communication lines, which are not illustrated, and controls driving of the rotor units 30. Each of the rotor units 30 includes, in addition to the first motor 34 and the second motor 36 described above, a motor drive circuit 60 that drives the motors, a rotation sensor 62 for detecting rotation states of the motors, and the like. In FIG. 6, components of the rotor unit 30FL are represented by "FL", components of the rotor unit 30FR are represented by "FR", components of the rotor unit 30RL are represented by "RL", and components of the rotor unit 30RR are represented by "RR". Note that the rotor units 30 each include a battery, which is not illustrated, for power supply to the motor drive circuit 60.

The controller 100 outputs control signals to the individual motor drive circuits 60 in accordance with control programs to control the rotations of the individual first motors 34 and the individual second motors 36. The front deflection mechanism is controlled by driving of the second motors 36 of the front rotor units 30F, and the rear deflection mechanism is controlled by driving of the second motors 36 of the rear rotor units 30R. In this manner, switching between the cruising mode and the VTOL mode is performed. The rotating speeds of the individual first motors 34 are adjusted to control the cruising speed of the VTOL aircraft 1 and perform pitch control, yaw control, and roll control.

The rotation sensors 62 output signals indicating the rotating directions and the number of rotations of the second motors 36. The controller 100 receives these signals and determines the attitudes of the individual rotors 32 (that is, determines whether the VTOL aircraft 1 is in a cruising state or in a VTOL state). The rotation sensors 62 output signals indicating the rotating speeds of the first motors 34. The controller 100 receives these signals and determines whether or not the rotating speeds of the individual rotors 32 have reached control target values.

The VTOL aircraft 1 further have mounted thereon various sensors such as a gyroscope sensor 70 and an acceleration sensor 72 and communication devices such as a GPS receiver 74, and detection signals and received signals from the sensors and the devices are input to the controller 100. The controller 100 can determine the attitude of the airframe on the basis of detection signals from the gyroscope sensor 70 and the acceleration sensor 72. The controller 100 can determine a current navigation position on the basis of signals received by the GPS receiver 74.

Next, changes in the state of the VTOL aircraft 1 caused by transition of the operation mode will be explained.

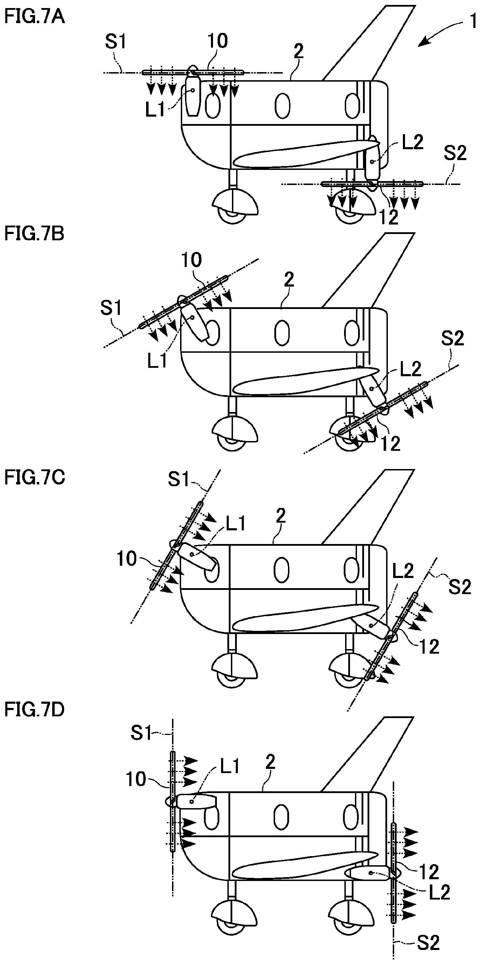

FIGS. 7A to 7D are diagrams illustrating control on switching from the VTOL mode to the cruising mode. FIGS. 7A to 7D illustrate processes of the control. Arrows in FIGS. 7A to 7D represent airflows passing through the rotors 32.

In the VTOL mode, the front rotors 10 are directed upward, the rear rotors 12 are directed downward, and airflows through all of the front and rear rotors 10 and 12 are directed downward to generate upward thrust. During takeoff, the thrust is larger than the gravity, which enables the VTOL aircraft 1 to ascend (FIG. 7A). At this point, the rotation plane S1 of the front rotors 10 is at a position higher than the upper face of the fuselage 2. The rotation plane S2 of the rear rotors 12 is at a position lower than the lower face of the fuselage 2.

When the VTOL aircraft 1 reaches a predetermined altitude, the front rotors 10 and the rear rotors 12 turn in synchronization with each other, and the operation mode switches to the cruising mode (FIGS. 7B and 7C). In this process, the front rotors 10 tilt from upward to forward positions with respect to the fuselage 2 about the axis L1, and the rotation plane S1 is always located outside the fuselage 2. The rear rotors 12 tilt from downward to rearward positions with respect to the fuselage 2 about the axis L2, and the rotation plane S2 is always located outside the fuselage 2.

When the respective rotors turn 90 degrees in this manner, the front rotors 10 are directed forward and the rear rotors 12 are directed rearward, and airflows through all of the front and rear rotors 10 and 12 are directed rearward to generate forward thrust (FIG. 7D). Thus, the operation mode switches to the cruising mode. In this process, the rotation plane S1 of the front rotors 10 is located ahead of a front face of the fuselage 2. The rotation plane S2 of the rear rotors 12 is located behind a rear face of the fuselage 2.

Conversely, the process of switching from the cruising mode to the VTOL mode goes through changes from FIG. 7D back to FIG. 7A. During landing, the thrust of the front rotors 10 and the rear rotors 12 is smaller than the gravity, which enables the VTOL aircraft 1 to descend.

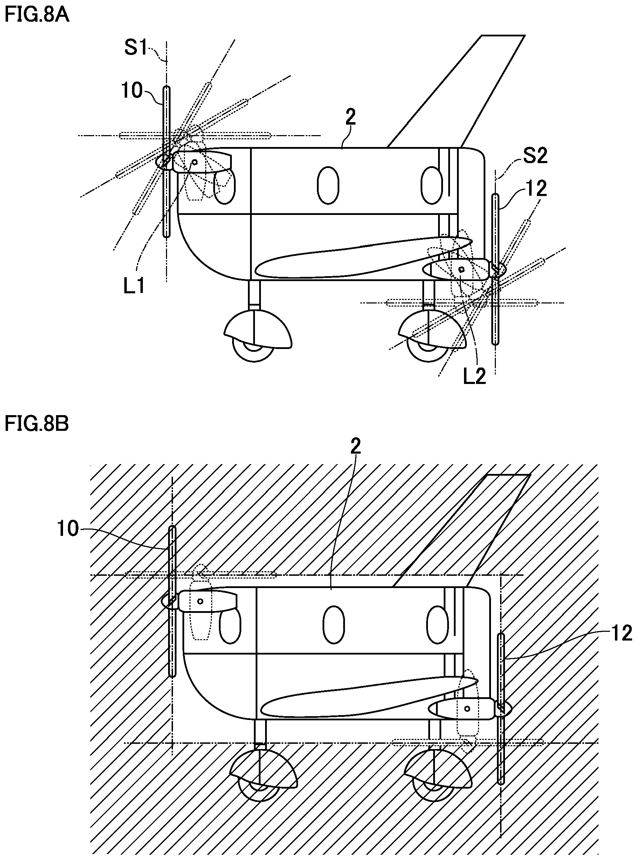

FIGS. 8A and 8B are diagrams illustrating changes of the rotation planes of the rotors. FIG. 8A illustrates processes of changes of the rotation planes at operation mode transitions. FIG. 8B illustrates change areas of the rotation planes.

As illustrated in FIG. 8A, during switching of the operation mode, the front rotors 10 turn about pivot shafts having the axis L1. The front rotors 10 continuously change the angle with respect to the airframe within a range (first range) of 90 degrees between a VTOL state of being directed upward and a cruising state of being directed forward. The "first range" includes an angle at which the rotation surfaces of the front rotors 10 are positioned above the fuselage 2 and an angle at which the rotation surfaces thereof are positioned ahead of the fuselage 2. While the front rotors 10 turn, the rotation plane S1 does not pass across the fuselage 2.

In contrast, the rear rotors 12 turn about pivot shafts having the axis L2. The rear rotors 12 continuously change the angle with respect to the airframe within a range (second range) of 90 degrees between a VTOL state of being directed downward and a cruising state of being directed rearward. The "second range" includes an angle at which the rotation surfaces of the rear rotors 12 are positioned below the fuselage 2 and an angle at which the rotation surfaces thereof are positioned behind the fuselage 2. While the rear rotors 12 turn, the rotation plane S2 does not pass across the fuselage 2.

Specifically, as indicated by a hatched area representing change areas of the rotation planes S1 and S2 in FIG. 8B, the positions of the front rotors 10 and the rear rotors 12 relative to the airframe are set and the turning directions and the turning ranges of the front rotors 10 and the rear rotors 12 are set so that the rotation planes S1 and S2 do not pass across the fuselage 2. When a rotor has interfered with a foreign material, the foreign material is estimated to scatter along the rotation plane of the rotor. Thus, in view of all of a VTOL state, a cruising state, and transitions between these states, the change areas of the rotation planes S1 and S2 can be assumed to be scattering areas of foreign materials (areas in which foreign materials can scatter). According to the embodiment, the scattering areas of foreign materials can be set outside the fuselage 2.

Next, control processes performed by the controller 100 will be explained.

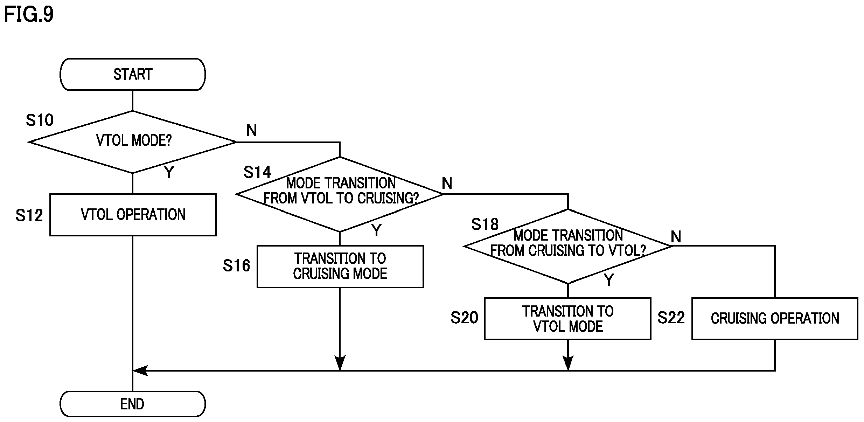

FIG. 9 is a flowchart illustrating an operation mode switching process. This process is triggered by input of selection of an operation mode made by a relay switch during autonomous flight.

When the VTOL mode is selected while the VTOL aircraft 1 is in a stopped state (Y in S10), the controller 100 performs a VTOL operation (S12). Specifically, the first motors 34 of the rotor units 30 are driven with the front rotors 10 being directed upward and the rear rotors 12 being directed downward, to make the VTOL aircraft 1 take off.

When the cruising mode is selected during a VTOL state (N in S10, Y in S14), the operation mode is switched to the cruising mode (S16). Specifically, the second motors 36 of the rotor units 30 are driven to turn the front rotors 10 from the upward direction to the forward direction and the rear rotors 12 from the downward direction to the rearward direction. Thereafter, the first motors 34 of the rotor units 30 are controlled to rotate at appropriate rotating speeds depending on the cruising speed.

When the VTOL mode is selected during a cruising state (N in S14, Y in S18), the operation mode is switched to the VTOL mode (S20). Specifically, the second motors 36 of the rotor units 30 are driven to turn the front rotors 10 from the forward direction to the upward direction and the rear rotors 12 from the rearward direction to the downward direction. In this process, the first motors 34 of the rotor units 30 are controlled to rotate at appropriate rotating speeds for landing. If there is no request for changing the operation mode during the cruising state (N in S18), the cruising mode is continued (S22).

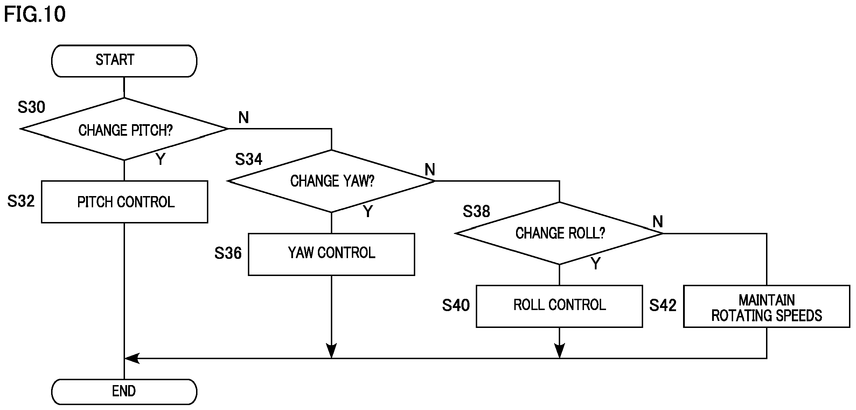

FIG. 10 is a flowchart illustrating a process of controlling the attitude of the airframe. This process is performed on the basis of signals output from a flight controller, which is not illustrated, during autonomous flight. Note that the flight controller may be included in the controller 100.

When a pitch change is requested (Y in S30), the controller 100 performs either one of the controls shown in Table 1 above depending on the requested change (S32). Specifically, the controller 100 adjusts the rotating speeds of the respective rotors 32FL, 32FR, 32RL, and 32RR to achieve a target pitch attitude.

When a yaw change is requested (N in S30, Y in S34), the controller 100 performs either one of the controls shown in Table 2 above depending on the requested change (S36). Specifically, the controller 100 adjusts the rotating speeds of the respective rotors 32FL, 32FR, 32RL, and 32RR to achieve a target yaw attitude.

When a roll change is requested (N in S34, Y in S38), the controller 100 performs either one of the controls shown in Table 3 above depending on the requested change (S40). Specifically, the controller 100 adjusts the rotating speeds of the respective rotors 32FL, 32FR, 32RL, and 32RR to achieve a target roll attitude. When none of pitch, yaw, and roll changes are requested (N in S38), the rotating speeds of the respective rotors are maintained (controlled to the reference rotating speeds during cruising) (S42), and the process is temporarily terminated.

As described above, according to the embodiment, the positions of the front rotors 10 and the rear rotors 12 relative to the airframe and the turning directions of the rotors are set so that the rotation planes S1 and S2 of the rotors do not pass across the fuselage 2 when the rotors are turned for transition of the operation mode. Thus, even if a foreign material interferes with any of the rotors, it is possible to prevent or reduce damage to the fuselage 2. As a result, not only the safety of passengers and pilots but also instruments and the like mounted in the fuselage 2 can be protected.

In the embodiment, to reduce the weight of the VTOL aircraft 1, no ducts for covering the radial peripheries of the front rotors 10 and the rear rotors 12 are provided. Because the blades of the rotors of the VTOL aircraft 1 are exposed to the outside, the VTOL aircraft 1 is more likely to interfere with a foreign material than a VTOL aircraft including ducts. Even if interference occurs, however, the likelihood of an adverse impact on the fuselage 2 is reduced.

### [Modifications]

### First Modification

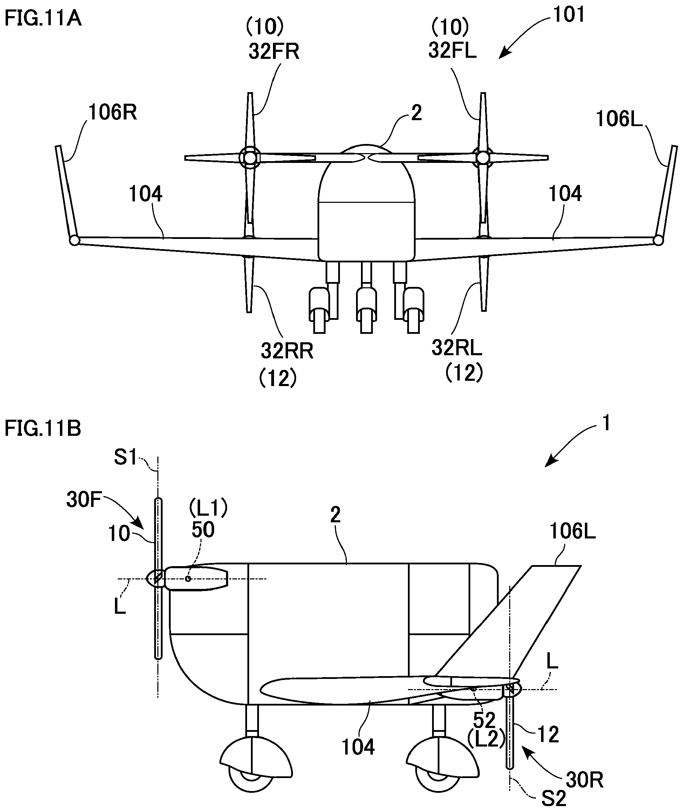

FIGS. 11A and 11B are diagrams illustrating a configuration of a VTOL aircraft according to a modification. FIG. 11A is a front view, and FIG. 11B is a side view.

As illustrated in FIG. 11A, a VTOL aircraft 101 has no vertical tail wing on the fuselage 2. The VTOL aircraft 101, however, includes fins 106L and 106R at respective wing ends of a pair of main wings 104 to achieve the stability in the cruising direction. The fins 106L and 106R can be replaced by vertical tail wings, and are also capable of suppressing induced drag of the main wings 104.

As also illustrated in FIG. 11B, in the present modification as well, the axes L of the front rotors 10 are parallel to the axes L of the rear rotors 12 and the axes L of the front rotors 10 are at positions higher than the axes L of the rear rotors 12 during cruising. In addition, the positions of the front rotors 10 and the rear rotors 12 relative to the airframe and the turning directions of the rotors are set so that the rotation planes S1 and S2 do not pass across the fuselage 2 in any of the cruising mode, the VTOL mode, and mode transitions. Thus, the same effects as those in the embodiment described above can be produced.

### Second Modification

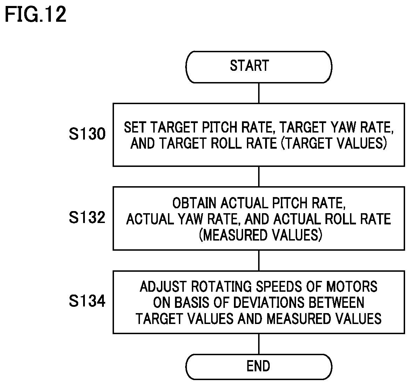

FIG. 12 is a flowchart illustrating a process of controlling the attitude of an airframe according to a modification.

In the present modification, each of pitch, yaw and roll is independently controlled in attitude control of the airframe. Thus, the following feedback control is repeated on a predetermined control cycle.

The controller 100 sets a target pitch rate, a target yaw rate, and a target roll rate (that is, target values) on the basis of signals output from the flight controller, and controls the rotating speeds of the individual motors (S130). Subsequently, the controller 100 detects an actual pitch rate, an actual yaw rate and an actual roll rate (that is, measured values) on the basis of detected values from the gyroscope sensor 70 and the like (S132). The controller 100 then computes a difference between the actual pitch rate and the target pitch rate, a difference between the target yaw rate and the actual yaw rate, and a difference between the target roll rate and the actual roll rate (that is, deviations between target values and measured values), and adjusts the rotating speeds of the respective motors so that the deviations become closer to zero (S134).

The present invention is not limited to the embodiments and modifications described above, and any component thereof can be modified and embodied without departing from the scope of the invention. Components described in the embodiments and modifications can be combined as appropriate to form various embodiments. Some components may be omitted from the components presented in the embodiments and modifications.

In the embodiment described above, an example of a configuration in which the fuselage 2 integrated with the airframe is a "main module" and the rotation planes S1 and S2 of the rotors do not pass across the fuselage 2 regardless of the operation mode has been presented. In a modification, a payload module that is removable from an airframe may be a "main module". The "payload module" may be an uncrewed module or a crewed module. The payload module may be a module for containing human, goods, freight, or other objects to be transported, or goods or freight itself.

In the embodiment described above, an example of an automatically operated aircraft (automatically controlled aircraft) with no pilot on board has been presented as the VTOL aircraft 1. In a modification, the VTOL aircraft 1 may be a flight vehicle that a pilot can get on. A cockpit may be provided at a front part of the cabin 16 inside the fuselage 2. The VTOL aircraft 1 may be both operable by a pilot and automatically operable. The process of switching the operation mode described above may be triggered by an operation performed by a pilot. The process of controlling the attitude of the airframe may also be performed on the basis of control operations performed by a pilot.

The process of controlling the attitude according to the second modification may be performed on the basis of control operations performed by a pilot. Specifically, the target pitch rate, the target yaw rate, and the target roll rate may be set on the basis of control operations performed by a pilot. As the speed of a control operation (for example, the speed of a control stick operation) performed by the pilot is higher and as the amount of operation is larger, each rate may be set to be larger.

In the embodiment described above, an example of a structure in which the center of gravity G of the VTOL aircraft 1 is slightly lower than the center of the fuselage 2 in the vertical direction of the airframe has been presented. In a modification, the center of gravity G thereof may be higher than the center of the fuselage 2 in the vertical direction of the airframe. In this case, the pitching moment in the forward inclination direction (the nose lowering direction) of the airframe and the pitching moment in the rearward inclination direction (the nose lifting direction) balance out when the rotating speed of the rotors 32FL and 32FR is higher than the rotating speed of the rotors 32RL and 32RR. The rotor rotating speeds at which the pitching moments in the forward inclination direction and in the rearward inclination direction balance out may be set as reference rotating speeds.

Alternatively, the center of gravity G thereof may be at the center of the fuselage 2 in the vertical direction of the airframe. In this case, the reference rotating speeds (corresponding to "balanced rotating speeds") of the rotors 32FL, 32FR, 32RL, and 32RR at which the pitching moments balance out are equal to each other. In other words, the pitching moments balance out when the rotating speed of the rotors 32FL and 32FR is equal to the rotating speed of the rotors 32RL and 32RR. Thus, for changing the rotating speeds to lower the nose of the airframe, the rotating speed of the rotors 32FL and 32FR may be made to be higher than the rotating speed of the rotors 32RL and 32RR, and conversely, for changing the rotating speeds to lift the nose of the airframe, control may be performed to make the rotating speed of the rotors 32FL and 32FR lower than the rotating speed of the rotors 32RL and 32RR.

While an example of a crewed flight vehicle which passengers board has been presented as the VTOL aircraft 1 in the embodiment described above, the VTOL aircraft 1 may be uncrewed flight vehicle which no crew members such as a pilot and no passengers board. An equipment room, a machine room, a freight room, and the like may be provided inside the fuselage.

Although not mentioned in the embodiment described above, an area corresponding to a preset important core part of the VTOL aircraft may be defined as a "damage avoiding area", and the VTOL aircraft may be structured so that the rotation planes of the rotors do not pass across the damage avoiding area. The "damage avoiding area" may be a part where a damage obstructs the flight or a part where a human such as a crew member or a passenger can be present. Alternatively, the "damage avoiding area" may be a part in which control-related devices are mounted.

Specifically, a space, such as a cockpit and a cabin, in which a human can be present during flight may be defined as an important core part and a corresponding part of the fuselage may be defined as a "damage avoiding area". Only the cabin may be defined as an important core part. Alternatively, the "important core part" may include a space in which devices for flight control are mounted (such as an equipment room). Alternatively, windows and the like with relatively low strength of the airframe may be exclusively defined as "damage avoiding areas".

In the embodiment described above, an example of a structure in which a pair of left and right front rotors and a pair of left and right rear rotors are provided on the airframe has been presented. In a modification, two or more pairs of left and right front rotors and two or more pairs of left and right rear rotors may be provided. In this case as well, the rotation planes of the front rotors and the rear rotors are within ranges that do not pass across the main module (or the damage avoiding area).

In the embodiment described above, an example in which the turning range (first range) of the front rotors is a range of 90 degrees between a VTOL state of being directed upward and a cruising state of being directed forward has been presented. Similarly, an example in which the turning range (second range) of the rear rotors is a range of 90 degrees between a VTOL state of being directed downward and a cruising state of being directed rearward has been presented. In a modification, one or both of the first range and the second range may be set to be larger than 90 degrees. In other words, the turnable ranges of either or both of the front rotors and the rear rotors may be larger than 90 degrees. Note that the first range includes an angle at which the rotation surface of each front rotor is located above the main module and an angle at which the rotation surface of each front rotor is located ahead of the main module. The second range includes an angle at which the rotation surface of each rear rotor is located below the main module and an angle at which the rotation surface of each rear rotor is located behind the main module.

In the embodiment described above, a structure including the vertical tail wing on the fuselage has been presented, and in the modification described above, a structure including no vertical tail wing but including fins (wing-end small wings) at the wing ends of the main wings has been presented. In another modification, both of a vertical tail wing and fins may be included. In addition, although not mentioned in the embodiment and modifications described above, the vertical tail wing and the fins are preferably arranged at positions across which the rotation planes of the front rotors and the rear rotors do not pass.

In the embodiment described above, an example of fixed wheels 8 having leg parts that are always exposed downward from the fuselage 2 has been presented. In a modification, a wheel storing mechanism capable of storing wheels in the fuselage may be provided. A structure in which the rotation planes of the front rotors and the rear rotors do not pass across the leg parts in a wheel storage state may be applied. Such a structure reduces the probability of damage on the wheels even if a foreign material interferes with a rotor and thus scatters while the airframe is lifted during VTOL.

In the embodiment described above, an example of a structure in which the main wings 4 are provided on a lower part the fuselage 2 has been presented. In a modification, the main wings may be provided on an upper part of the fuselage. In addition, while the main wings 4 are swept-back wings in the embodiment described above, the main wings 4 may have other shapes such as elliptic wings, rectangular wings, and tapered wings.

In the embodiment described above, as illustrated in FIGS. 5A, 5B and 6, an example of a configuration in which a second motor 36 and a motor drive circuit 60 are included in each rotor unit 30 has been presented. In a modification, a second motor 36 may be included in each rod 24. In addition, a motor drive circuit 60 may be included in each rod 24.

While an example of a configuration in which the respective rotor units include no ducts (protective shields) has been presented, ducts may be provided. Lightweight ducts annularly surrounding the peripheries of the rotors may be provided to minimize deterioration of the rotors. Even if a duct is broken, the structure in which the rotation planes of the front rotors and the rear rotors do not pass across the main module (or the damage avoiding area) produces the same effects as those in the embodiment described above.

In the embodiment described above, an example in which the front rotors 10 are arranged on a front and upper part of the airframe and the rear rotors 12 are arranged on a rear and lower part of the airframe has been presented. In a modification, the positions of at least either of the front rotors and the rear rotors on the airframe may be changed. For example, the front rotors may be arranged on a front and lower part of the airframe and the rear rotors may be arranged on a rear and upper part of the airframe. In this case as well, the rotation planes of the front rotors and the rear rotors are within ranges that do not pass across the main module.

While an example of a VTOL aircraft has been presented as a flight vehicle in the embodiment described above, "the structure in which the rotation planes of the front rotors and the rear rotors are within ranges that do not pass across the main module" may be applied to a flight vehicle other than a VTOL aircraft. In addition, "the structure in which the rotation planes of the front rotors and the rear rotors are within ranges that do not pass across the damage avoiding area" may be applied to a flight vehicle other than a VTOL aircraft. In these cases, the front rotors and the rear rotors may each turn about a horizontal axis, a vertical axis, an inclined axis, or others.

Although not mentioned in the embodiment described above, arranging the pivot shafts of the front rotors on a front and upper part of the airframe and arranging the pivot shafts of the rear rotors on a rear and lower part of the airframe are also deemed to be a significant technical feature. Specifically, if the rotating shafts of the front rotors and the rotating shafts of the rear rotors are at the same height as described in US 10618656 B2, it is difficult to secure a safe area (damage avoiding area) in the vertical direction of the airframe. In other words, it is difficult to achieve a sufficient vertical dimension (room space) of the main module while ensuring the safety of the main module. Furthermore, if the rotating shafts of the front rotors and the rotating shafts of the rear rotors are at the same height, mechanisms other than rotors are required for attitude control in the pitching directions (so-called control surfaces have to be used, which decreases the autonomy). According to the embodiment described above, such technical problems are solved.

Such a flight vehicle can be defined as follows.

A flight vehicle including:
a front rotor on a front part of an airframe;
a rear rotor on a rear part of the airframe;
a first pivot shaft arranged horizontally on the airframe and turnably supporting the front rotor;
a second pivot shaft arranged horizontally on the airframe and turnably supporting the rear rotor;
a front mechanism for turning the front rotor about the first pivot shaft; and
a rear mechanism for turning the rear rotor about the second pivot shaft, wherein
the first pivot shaft is at a position higher than the second pivot shaft.

Furthermore, in a manner similar to the embodiment described above, as a result of arranging the front rotors at positions higher than the main wings and arranging the rear rotors behind the main wings, airflows through the front rotors less likely to reach the main wings. This is also advantageous in that disturbances are less likely to be caused on the attitude of the airframe.

## Claims

1. A flight vehicle comprising:
a front rotor on a front part of an airframe;
a rear rotor on a rear part of the airframe;
a front deflection mechanism that changes an angle of the front rotor with respect to the airframe within a first range;
a rear deflection mechanism that changes an angle of the rear rotor with respect to the airframe within a second range; and
a main module for containing objects to be transported, the main module being in the airframe, wherein
the first range is set to a range in which a plane containing a rotation surface of the front rotor does not pass across the main module, and
the second range is set to a range in which a plane containing a rotation surface of the rear rotor does not pass across the main module.

2. The flight vehicle according to claim 1, wherein
the first range includes an angle at which the rotation surface of the front rotor is located above the main module and an angle at which the rotation surface of the front rotor is located ahead of the main module,
the second range includes an angle at which the rotation surface of the rear rotor is located below the main module and an angle at which the rotation surface of the rear rotor is located behind the main module.

3. The flight vehicle according to claim 1 or 2, wherein
the front rotor is arranged on a front and upper part of the airframe, and
the rear rotor is arranged on a rear and lower part of the airframe.

4. The flight vehicle according to any one of claims 1 to 3, wherein
a pair of left and right front rotors are provided as the front rotor on the main module, and
a pair of left and right rear rotors are provided as the rear rotor on the main module.

5. The flight vehicle according to any one of claims 1 to 4, wherein
the front rotor and the rear rotor are tiltrotors being tiltable with respect to the airframe.

6. The flight vehicle according to any one of claims 1 to 5, wherein
the front rotor has no duct covering a radial periphery of the front rotor, and
the rear rotor has no duct covering a radial periphery of the rear rotor.

7. The flight vehicle according to any one of claims 1 to 6, wherein
during cruising, an axis of the front rotor is parallel to an axis of the rear rotor, and the axis of the front rotor is at a position higher than the axis of the rear rotor.

8. A flight vehicle comprising:
a front rotor on a front part of an airframe;
a rear rotor on a rear part of the airframe;
a front deflection mechanism capable of changing an angle of the front rotor with respect to the airframe;
a rear deflection mechanism capable of changing an angle of the rear rotor with respect to the airframe;
a main module for containing objects to be transported, the main module being in the airframe, and
a processor for controlling the front deflection mechanism and the rear deflection mechanism, wherein
the processor controls the front deflection mechanism so that a plane containing a rotation surface of the front rotor does not pass across the main module, and
the processor controls the rear deflection mechanism so that a plane containing a rotation surface of the rear rotor does not pass across the main module.

9. The flight vehicle according to claim 8, wherein
during vertical take-off and landing, the processor controls the front deflection mechanism so that the rotation surface of the front rotor is positioned above the main module and controls the rear deflection mechanism so that the rotation surface of the rear rotor is positioned below the main module, and
during cruising, the processor controls the front deflection mechanism so that the rotation surface of the front rotor is positioned ahead of the main module and controls the rear deflection mechanism so that the rotation surface of the rear rotor is positioned behind the main module.

10. The flight vehicle according to claim 9, wherein
for changing an attitude of the airframe in a direction to lower a nose of the airframe during cruising, the processor controls a rotating speed of the front rotor to be higher than a balanced rotating speed of the front rotor at which pitching moments on the airframe balance out, and
for changing the attitude of the airframe in a direction to lift the nose of the airframe during cruising, the processor controls the rotating speed of the front rotor to be lower than the balanced rotating speed.

11. The flight vehicle according to claim 9 or 10, wherein
the front rotor includes a front-left rotor and a front-right rotor,
the rear rotor includes a rear-left rotor and a rear-right rotor,
for changing an attitude of the airframe in a direction to make a nose of the airframe to face rightward during cruising, the processor controls rotating speeds of the front-left rotor and the rear-left rotor to be higher than rotating speeds of the front-right rotor and the rear-right rotor, and
for changing the attitude of the airframe in a direction to make the nose of the airframe to face leftward during cruising, the processor controls the rotating speeds of the front-left rotor and the rear-left rotor to be lower than the rotating speeds of the front-right rotor and the rear-right rotor.

12. The flight vehicle according to any one of claims 9 to 11, wherein
the front rotor includes a front-left rotor and a front-right rotor,
the rear rotor includes a rear-left rotor and a rear-right rotor,
for changing an attitude of the airframe in a direction in which the airframe leans rightward, the processor controls rotating speeds of the front-left rotor and the rear-right rotor to be higher than rotating speeds of the front-right rotor and the rear-left rotor, and
for changing the attitude of the airframe in a direction in which the airframe leans leftward during cruising, the processor controls the rotating speeds of the front-left rotor and the rear-right rotor to be lower than the rotating speeds of the front-right rotor and the rear-left rotor.

13. A flight vehicle comprising:
a front rotor on a front part of an airframe;
a rear rotor on a rear part of the airframe;
a front deflection mechanism that changes an angle of the front rotor with respect to the airframe within a first range;
a rear deflection mechanism that changes an angle of the rear rotor with respect to the airframe within a second range; and
a main module for containing objects to be transported, the main module being in the airframe, wherein
the first range is set to a range in which a plane containing a rotation surface of the front rotor does not pass across a predetermined damage avoiding area of the main module, and
the second range is set to a range in which a plane containing a rotation surface of the rear rotor does not pass across the damage avoiding area.
